# EUROPEAN PATENT SPECIFICATION

(11) **EP 2 922 905 B1**
(45) Date of publication and mention of the grant of the patent: **06.06.2018**
(21) Application number: 13801898.1
(22) Date of filing: 20.11.2013
(51) Int. Cl.: C08J 11/08

(54) **PROCESSING OF COTTON-POLYESTER WASTE TEXTILE**
VERARBEITUNG VON BAUMWOLL-POLYESTER-TEXTILABFÄLLEN
TRAITEMENT DE DÉCHETS DE TEXTILES EN COTON ET POLYESTER

(30) Priority: 21.11.2012 NL 2009851
(43) Date of publication of application: 30.09.2015
(73) Proprietor: Agrawal Ecolabs, 7521 ZT Enschede (NL); Filo Engineering, 6824 AM Arnhem (NL); Gerrit Bouwhuis B.V., 7581 BZ Losser (NL); Brinks Management Advice/Techne B.V., 7604 CG Almelo (NL)
(72) Inventor: BRINKS, Gerrit Johannes, NL-7604 CG Almelo (NL); BOUWHUIS, Gerhard Herman, NL-7581 BZ Losser (NL); AGRAWAL, Pramodkumar Bhagwandas, NL-7521 ZT Enschede (NL); GOOIJER, Hendrik, NL-6824 AM Arnhem (NL)
(74) Representative: V.O.
(86) International application number: PCT/NL2013/050834
(87) International publication number: WO 2014/081291

(56) References cited:
- CN-A- 102 199 310

## Description

The invention relates to the field of textile products and in particular to re-use of waste textile products containing cellulose and synthetic fibers.

Around the world millions of tons of waste textile fibers are produced annually. A large portion of this waste is composed of blended fabrics such as polyester-cotton textile fiber. Waste blended products have limited recycling methods because of component and performance differences. At present, used cotton-polyester garments are either sold as second-hand material or torn apart and used in low quality textile products, buried or burnt. These treatments are not only waste of the valuable natural material but some also have adverse effects on the environment. Therefore, new recovery methods of blended waste textile products are necessary.

Due to a growing world population and growing wealth worldwide, it is to be expected that the demand for cotton will grow. However, the potential for the growth of the production is limited. Furthermore, the energy and water consumption during the production of cotton are relatively large. It is therefore desirable to find ways to re-use cotton from cotton-containing waste materials. However, these materials are mostly cotton-polyester garments and thus separation of cotton from polyester is necessary before cotton can be re-used.

Presently, it is known to separate cotton from mixed cotton-polyester sources by solubilising the polyester content whereby the cotton fabric is retained. Such process is for example described in US 5,342,854. Herein, polyester is dissolved in a sulfone solvent and then isolated from cotton by physical separation processes such as filtration. A major disadvantage of this process is that the cotton obtained is of low quality and needs to be processed afterwards to be suitable for high quality re-use such as in yarns suitable for garments. Also, all the insoluble finishing chemicals, dirt, dyes, etc, present in the cotton-polyester waste, remain in the cotton residue and will have an adverse effect on the further processing of the cotton.

It is therefore desirable to provide a method for the separation of cellulose fibers from its blends with synthetic fibers, especially cotton-polyester blends, which results in high quality re-use of cellulose fibers. The method should also be suitable for any cotton content of the cotton-polyester blends. Finally, it is desired that the separation does not require aggressive chemicals, is fast and can easily be applied on industrial scale.

In order to address one or more of the foregoing desires, the present invention provides a method for regenerating cellulose fibers from textile comprising both cellulose and synthetic fibers, comprising the steps:
(a) treating the textile with a cellulose solvent comprising an amine oxide to dissolve the cellulose at a temperature of 40-120 °C, for a duration of 1-90 minutes and with a cellulose concentration in the cellulose-containing liquid phase of 0.5-35 wt.%,
(b) separating a cellulose-containing liquid phase from the synthetic fibers, wherein the cellulose-containing liquid phase is separated by decantation, centrifuge or filtration; and
(c) subjecting the cellulose-containing liquid phase to a cellulose spinning process to produce cellulose fibers,
wherein the textile is treated with a biocatalytical or chemical_ solubilisation enhancer before or during the dissolution step (a) to bring the degree of polymerisation of cellulose in the range 200-1200 as measured according to ASTM D1795..

The present invention is based on a judicious insight that by using a suitable solvent, cellulose fibers, preferably in the form of cotton, can be solubilised from its blends with polyester, or with other synthetic fibers, which results in a cellulose solution suitable for a spinning process to produce high quality cellulose fibers. In the present invention, the separation and solubilisation of cellulose fibers from its blends with synthetic fibers is performed in one step, which approach is simple, results in high quality cellulose and can be applied to virtually any cotton-containing waste textile.

CN102199310 discloses a method for recycling cotton-containing components in waste cotton-polyester blended fabrics, including dissolving cellulose from the blend by using 4-methylmorpholine-N-oxide. However, CN102199310 fails to disclose or suggest the addition of a solubilisation enhancer before or during the dissolution to bring the degree of polymerization of cellulose in the range 200-1200.

The first step in the process of the invention is providing of a starting textile material containing both cellulose and synthetic fibers. The starting material can be any textile material and is preferably a textile waste material. The cellulose fibers may comprise natural, plant-made fibers such as cotton, linen, or may be man-made fiber such as regenerated cellulose, or a mixture of these. More preferably, cellulose fibers in the textile are present in the form of cotton. Under "synthetic fibers" man-made fibers are understood that are chemically modified, e.g. synthesized from monomers. The synthetic fibers in the present invention can for example be polyester (polyethylene terephthalate, PET), polypropylene, polyamides, etc. The textile can comprise yarns of the same composition, being a blend of cellulose and synthetic fibers, or it can have yarns of different composition, e.g. separate cotton and synthetic yarns. The invention is particularly advantageous when applied to cotton-synthetic fiber blends, and especially to cotton-polyester blend textiles since these represent the largest group of textile waste. The textile waste may originate from various sources such as used garments, cloths, low grade cotton, excess from textile factories, etc.

In the following step, the textile is treated with a cellulose-dissolving solvent comprising an amine oxide to produce a cellulose-containing liquid phase, or a cellulose solution. Preferably, solvents are used which do not degrade cellulose completely but only convert it into a non-fibrous condition (cellulose solution). The cellulose hence retains its molecular structure and can be reused in fiber applications again. Solvents that can be used for that purpose are amino oxides such as N-methyl morpholine N-oxide (NMMO), orthophosphoric acid, ionic liquids, ammonia/ammonium thiocyanate and others. The solvents can be used in a mixture with water. The preferred solvents are amino oxides, more preferably tertiary aminoxides, as these are less aggressive and are easy in handling compared to other solvents. In a preferred embodiment, the amino oxide used is NMMO. Particularly suitable are aqueous amino oxides, especially NMMO in mixtures with water. An advantage of using cellulose-dissolving solvents such as NMMO is that the starting material does not need to undergo any cleaning treatment as the dirt and other additives do not contaminate the cellulose solution and stay in the remaining solid phase.

The mixture of the textile and the solvent is then heated to a temperature in the range 40-120°C to allow the dissolution of cellulose. A skilled person can easily determine suitable conditions for achieving cellulose dissolution. The dissolution time is from 1 to 90 min, preferably 30-60 min. Preferably, the mixture of the textile and the solvent is heated to a temperature 85-100°C during the dissolution step. The temperatures above 100°C may cause yellowing of the solution, while below 85°C the viscosity of the solution may be inconveniently high.

As a result of the solubilisation, the cellulose from the starting blend is present as a cellulose solution (dope). The cellulose concentration in the cellulose-containing liquid phase is 0.5-35 wt.%. Preferably, the dope contains cellulose in the range of 10-17 wt.%. This latter range has a sufficient cellulose concentration for efficient and economic fiber production and on the other hand, high viscosities of the solution are avoided which are characteristic for anisotropic solutions at high concentrations.

If NMMO is used as a cellulose solvent, the dope preferably contains 10-17 wt.% cellulose, 5-15 wt.% water, the rest being NMMO. The composition of the cellulose solution can however be varied in broader ranges, such as 0.5-35 wt.% cellulose, 0-25 wt.% water and 40-90 wt.% NMMO, more preferably, 1-30 wt.% cellulose, 0.1-20 wt.% water and 50-85 wt.% NMMO.
To improve solubilisation, the textile is treated with a biocatalytical or chemical_solubilisation enhancer before or during the dissolution step (a) to bring the degree of polymerisation of cellulose in the range 200-1200 as measured according to ASTM D1795. Examples of these are oxidising agents such as bleaches, H₂O₂, and permanganates, acids such as phosphoric acid, oxalic acid and sulphuric acid, and enzymes such as cellulase. Treatment with solubilisation enhancers can be performed before the dissolution step, as a pre-treatment. However, solubilisation enhancers can also be added during the dissolution step.

An additional advantage of the use of bio-catalytic or chemical solubilisation enhancers is the possibility to adjust the degree of polymerisation (DP) of cellulose in the cotton waste to the required window of operation for the subsequent cellulose spinning process. For the spinning purposes, the DP is preferably in the range 200-1200. Therefore, if necessary, the DP of cellulose in the solution is adjusted to 200-1200, more preferably to 400-800 before the following, cellulose spinning step. This can suitably be done with the aid of solubilisation enhancers. The DP is measured according to the ASTM D1795 standard test.

In addition, anti-oxidation agents can be used during the dissolution process, in order to prevent yellowing of the solution and degradation of the cellulose during dissolution. Preferably, propylgallate is used for this purpose.

In the following step, the cellulose-containing liquid phase is separated from the synthetic fibers by decantation, centrifuge or filtration The synthetic fibers are usually not affected by the treatment with cellulose-dissolving agents. Therefore, these fibers can easily be separated from the cellulose solution. For this purpose, physical separation processes as precipitation, phase separation or centrifugation are particularly suited. The separated cellulose-containing liquid phase is subjected to the next step of producing fibers. The separated synthetic fibers can be dried and re-used as such, or alternatively these can further be processed.

For producing cellulose fibers from the cellulose solution any conventional cellulose spinning process can be used. An example of a suitable cellulose spinning process is a Lyocell process. In such process, a cellulose solution is pumped through spinnerets. The spinneret is pierced with small holes; when the solution is forced through these, long strands of fiber come out. The fibers are then immersed in another solution of an amino oxide which sets the fiber strands. The formed fibers are then are washed and dried. The strands can further be treated in a finishing area where e.g. lubricants are applied to the fibers. The amine oxide used to dissolve the cellulose and set the fiber after spinning is recycled; typically up to 98% of the amine oxide is recovered. Since there is little waste product, this process is relatively eco-friendly.

One major advantage of the process of the invention is that the separation of cellulose fibers from synthetic fibers and dissolving the cellulose fibers for the spinning process are now executed in one process step. A second major advantage is that all the insoluble non-cellulose material (dyes, dirt, resins, etc.) in the starting fiber blend remain in the synthetic fiber residue and will not hinder the latter cellulose spinning process. A further advantage is that the dissolution step is relatively short and does not use aggressive chemicals; it can thus be conveniently used in an industrial process.

The possibility to use cellulose fibers such as cotton from cotton/polyester waste for a cellulose spinning process opens possibilities for high quality re-use of textile waste and prevents downgrading of the valuable cotton waste which otherwise would be used in low-quality cotton applications, or would be burnt. The present invention contributes to solving the problems of a limited growth in cotton production relative to growing demand and the problem of recycling of textile waste. The use of the cotton part of this waste as a resource for high-quality regenerated cellulose, comparable to the Lyocell process, is new to the industry.

The same process for preparing a cellulose solution could also be applied to other processes such as reuse of polyester waste. The non-dissolved polyester part is then used for this purpose.

## Claims

1. Method for regenerating cellulose fibers from textile comprising both cellulose and synthetic fibers, comprising the steps:
(a) treating the textile with a cellulose solvent comprising an amine oxide to dissolve the cellulose at a temperature of 40-120 °C, for a duration of 1-90 minutes and with a cellulose concentration in the cellulose-containing liquid phase of 0.5-35 wt.%,
(b) separating a cellulose-containing liquid phase from the synthetic fibers, by decantation, centrifuge or filtration; and
(c) subjecting the cellulose-containing liquid phase to a cellulose spinning process to produce cellulose fibers,
wherein the textile is treated with a biocatalytical or chemical solubilisation enhancer before or during the dissolution step (a) to bring the degree of polymerisation of cellulose in the range 200-1200 as measured according to ASTM D1795.

2. The method according to claim 1, wherein the textile comprises cotton as the cellulose fibers.

3. The method according to claim 2, wherein the synthetic fibers comprise polyethylene terephthalate, polypropylene and/or polyamides, preferably, polyethylene terephthalate.

4. The method according to any one of the preceding claims, wherein step (a) is carried out at a temperature of 85-100 ° C.

5. The method according to any one of the preceding claims, wherein step (a) is carried out during 30-60 minutes.

6. The method according to claim 1, wherein the solubilisation enhancer is an enzyme, preferably a cellulase.

7. The method according to claim 1, wherein the solubilisation enhancer is an oxidising agent.

8. The method according to claim 1, wherein the solubilisation enhancer is an acid.

9. The method according to any one of the preceding claims, wherein in step (a) an anti-oxidant is added, preferably propylgallate.

10. The method according to any one of the preceding claims, wherein the cellulose solvent comprises N-methyl morpholine N-oxide.

11. The method according to claim 10, wherein N-methyl morpholine N-oxide is used in a mixture with water.

12. The method according to any one of the preceding claims, wherein the cellulose concentration in the cellulose-containing liquid phase is 10-17 wt.%.

13. The method according to any one of the preceding claims, wherein in step (c) the cellulose-containing liquid phase is pumped through spinnerets, following by washing and drying of the obtained fibers.

## Patentansprüche

1. Verfahren zur Regenerierung von Zellulosefasern von Textilien, umfassend Zellulose- wie auch Synthesefasern, umfassend die Schritte:
(a) Behandlung des Textils mit einem Zelluloselösungsmittel, umfassend ein Aminoxid zum Auflösen der Zellulose bei einer Temperatur von 40-120°C während einer Dauer von 1-90 Minuten und mit einer Zellulosekonzentration in der zellulosehaltigen Flüssigphase von 0,5-35 Gew.-%,
(b) Trennung einer zellulosehaltigen Flüssigphase von den Synthesefasern durch Dekantierung, Zentrifugieren oder Filtration; und
(c) Unterziehung der zellulosehaltigen Flüssigphase einem Zellulosespinnverfahren, um Zellulosefasern herzustellen,
wobei das Textil mit einem biokatalytischen oder chemischen Solubilisationsverstärker vor oder während dem Auflösungsschritt (a) behandelt wird, um den Grad der Polymerisation von Zellulose in den Bereich 200-1200, wie gemessen gemäß ASTM D1795, zu bringen.

2. Verfahren nach Anspruch 1, wobei das Textil Baumwolle als die Zellulosefasern umfasst.

3. Verfahren nach Anspruch 2, wobei die Synthesefasern Polyethylenterephthalat, Polypropylen und/oder Polyamide umfassen, bevorzugt Polyethylenterephthalat.

4. Verfahren nach einem der vorhergehenden Ansprüche, wobei Schritt (a) bei einer Temperatur von 85-100°C ausgeführt wird.

5. Verfahren nach einem der vorhergehenden Ansprüche, wobei Schritt (a) während 30-60 Minuten ausgeführt wird.

6. Verfahren nach Anspruch 1, wobei der Solubilisationsverstärker ein Enzym ist, bevorzugt eine Zellulase.

7. Verfahren nach Anspruch 1, wobei der Solubilisationsverstärker ein Oxidationsmittel ist.

8. Verfahren nach Anspruch 1, wobei der Solubilisationsverstärker eine Säure ist.

9. Verfahren nach einem der vorhergehenden Ansprüche, wobei in Schritt (a) ein Antioxidans hinzugefügt wird, bevorzugt Propylgallat.

10. Verfahren nach einem der vorhergehenden Ansprüche, wobei das Zelluloselösungsmittel N-Methylmorpholin-N-oxid umfasst.

11. Verfahren nach Anspruch 10, wobei N-Methylmorpholin-N-oxid in einem Gemisch mit Wasser verwendet wird.

12. Verfahren nach einem der vorhergehenden Ansprüche, wobei die Zellulosekonzentration in der zellulosehaltigen Flüssigphase 10-17 Gew.-% ist.

13. Verfahren nach einem der vorhergehenden Ansprüche, wobei in Schritt (c) die zellulosehaltige Flüssigphase durch Spinndüsen gepumpt wird, gefolgt von Waschen und Trocknen der gewonnenen Fasern.

## Revendications

1. Procédé de régénération de fibres de cellulose à partir d'un textile comprenant des fibres à la fois de cellulose et synthétiques, comprenant les étapes :
(a) de traitement du textile avec un solvant de la cellulose comprenant un oxyde d'amine pour dissoudre la cellulose à une température de 40-120°C, sur une durée de 1-90 minutes et avec une concentration en cellulose dans la phase liquide contenant de la cellulose de 0,5-35 % en masse,
(b) de séparation d'une phase liquide contenant de la cellulose des fibres synthétiques, par décantation, centrifugation ou filtration ; et
(c) de soumission de la phase liquide contenant de la cellulose à un procédé de filage de cellulose pour produire des fibres de cellulose,
dans lequel le textile est traité avec un promoteur de solubilisation biocatalytique ou chimique avant ou pendant l'étape de dissolution (a) pour amener le degré de polymérisation de cellulose dans l'intervalle de 200-1 200 comme mesuré selon ASTM D1795.

2. Procédé selon la revendication 1, dans lequel le textile comprend du coton comme les fibres de cellulose.

3. Procédé selon la revendication 2, dans lequel les fibres synthétiques comprennent du poly(éthylène téréphtalate), du polypropylène et/ou des polyamides, de préférence du poly(éthylène téréphtalate).

4. Procédé selon l'une quelconque des revendications précédentes, dans lequel l'étape (a) est réalisée à une température de 85-100°C.

5. Procédé selon l'une quelconque des revendications précédentes, dans lequel l'étape (a) est réalisée pendant 30-60 minutes.

6. Procédé selon la revendication 1, dans lequel le promoteur de solubilisation est une enzyme, de préférence une cellulase.

7. Procédé selon la revendication 1, dans lequel le promoteur de solubilisation est un agent oxydant.

8. Procédé selon la revendication 1, dans lequel le promoteur de solubilisation est un acide.

9. Procédé selon l'une quelconque des revendications précédentes, dans lequel dans l'étape (a) un anti-oxydant est ajouté, de préférence du gallate de propyle.

10. Procédé selon l'une quelconque des revendications précédentes, dans lequel le solvant de cellulose comprend du N-oxyde de N-méthylmorpholine.

11. Procédé selon la revendication 10, dans lequel le N-oxyde de N-méthylmorpholine est utilisé dans un mélange avec de l'eau.

12. Procédé selon l'une quelconque des revendications précédentes, dans lequel la concentration en cellulose dans la phase liquide contenant de la cellulose est de 10-17 % en masse.

13. Procédé selon l'une quelconque des revendications précédentes, dans lequel dans l'étape (c) la phase liquide contenant de la cellulose est pompée à travers des filières, suivi par un lavage et un séchage des fibres obtenues.
